# EUROPÄISCHE PATENTSCHRIFT

(11) **EP 2 581 624 B1**
(45) Veröffentlichungstag und Bekanntmachung des Hinweises auf die Patenterteilung: **31.08.2016**
(21) Anmeldenummer: 12187879.7
(22) Anmeldetag: 10.10.2012
(51) Int. Cl.: F16D 65/56

(54) **Scheibenbremse für ein Fahrzeug**
Disc brake for a vehicle
Frein à disque pour véhicule

(30) Priorität: 10.10.2011 DE 102011115465
(43) Veröffentlichungstag der Anmeldung: 17.04.2013
(73) Patentinhaber: KNORR-BREMSE Systeme für Nutzfahrzeuge GmbH, 80809 München (DE)
(72) Erfinder: Weber, Ralf, 80992 München (DE); Stich, Johann, 94560 Offenberg/Aschenau (DE); Gruber, Markus, 85560 Ebersberg (DE); Klingner, Matthias, 82272 Moorenweis (DE)
(74) Vertreter: Mattusch, Gundula

(56) Entgegenhaltungen:
- DE-A1-102006 020 550
- DE-A1-102008 003 924
- DE-U1- 9 422 342
- DE-U1-202011 005 452

## Beschreibung

Die Erfindung betrifft eine Scheibenbremse für ein Nutzfahrzeug nach dem Oberbegriff des Anspruchs 1.

In der DE 94 22 342 U1 ist eine derartige Scheibenbremse geoffenbart, bei der ein Bremshebel auf eine Brücke einwirkt, in der vorzugsweise zwei Stellspindeln gelagert sind, die jeweils ein Druckstück zur Aufnahme eines Bremsbelages aufweisen, das bei einer Bremsung an eine Bremsscheibe angedrückt wird. Die beiden Stellspindeln sind mit einem Außengewinde versehen und jeweils in eine Gewindebohrung der Brücke eingeschraubt.

Mithilfe einer Nachstelleinrichtung, die einer der Stellspindeln zugeordnet ist, und einem Mitnehmer der anderen Stellspindel wird durch Verdrehen der Stellspindeln in den Gewindebohrungen bei Verschleiß des Reibbelages der Bremsbelag so weit zugestellt, dass ein Lüftspiel zwischen dem Bremsbelag und der Bremsscheibe im Wesentlichen immer konstant bleibt. Dabei wird das maximale Verschleißmaß bestimmt von der zulässigen abtragbaren Dicke eines Reibbelages des Bremsbelags, der auf einer Belagträgerplatte befestigt ist, an der die Druckstücke angreifen.

Das genannte Verschleißmaß beträgt in der Regel mehrere Zentimeter, so dass die Stellspindeln dementsprechend aus der Brücke herausgedreht werden müssen, wobei die Stellspindeln eine Mindestlänge aufweisen müssen, um auch bei Erreichen des maximalen Zustellweges einen ausreichenden Halt in der Brücke zu haben.

Diese Mindestlänge der Stellspindel bestimmt das zugeordnete Abmaß der Brücke und damit das des Bremssattels.

Dies steht jedoch der stets gestellten Forderung nach einer Minimierung und damit Gewichtsreduzierung der Scheibenbremse insgesamt entgegen.

Zur Bremskraftübertragung auf die Bremsbeläge sind dem zuspannseitigen Bremsbelag zugeordnet Druckstücke vorgesehen, die entweder fest mit der Belagträgerplatte verbunden sind oder verdrehbar oder verdrehfest mit den Stellspindeln. In jedem Fall erfolgt eine Relativverdrehung der Druckstücke zu einem der genannten Bauteile, woraus sich ein nicht bestimmbares Betriebsverhalten ergeben kann, mit der Gefahr, dass die Funktionsfähigkeit der Bremse zumindest eingeschränkt wird.

Im Übrigen wird die Nachstellgeschwindigkeit des Bremsbelages durch die Gewindesteigung des Korrespondenzgewindes der Stellspindel einerseits und der Gewindebohrung der Brücke andererseits bestimmt. Aufgrund der nur begrenzt aufbringbaren Betätigungskraft der Nachstelleinrichtung muss ein Korrespondenzgewinde mit geringer Steigung gewählt werden, aus der sich eine relativ niedrige Nachstellgeschwindigkeit ergibt, die einem optimierten Betrieb der Nachstelleinrichtung entgegensteht.

Der Erfindung liegt die Aufgabe zugrunde, eine Scheibenbremse der gattungsgemäßen Art so weiterzuentwickeln, dass sie insgesamt kompakter und leichter wird und die Funktionsfähigkeit der Nachstelleinrichtung optimiert wird.

Diese Aufgabe wird durch eine Scheibenbremse mit den Merkmalen des Anspruchs 1 gelöst.

Bei gleichem möglichen Verstellmaß kann die Stellspindel nun wesentlich kürzer dimensioniert werden, so dass auch die Brücke daran angepasst einen geringeren Bauraum beansprucht und die Scheibenbremse insgesamt kompakter ausgeführt werden kann. Dies ist nicht nur insoweit vorteilhaft, als das Raumangebot zur Platzierung der Scheibenbremse am Fahrzeug eingeschränkt ist, sondern führt vor allem zu einer Gewichtsreduzierung der Scheibenbremse, mit den sich daraus ergebenden bekannten positiven Folgen, beispielsweise einem geringen Kraftstoffverbrauch des Fahrzeuges.

Nach einer vorteilhaften Weiterbildung der Erfindung weist die Stellspindel neben einem in die Brücke eingeschraubten Außenrohr mindestens ein Innenrohr auf, das ebenfalls ein Außengewinde besitzt, das in ein Innengewinde des Außenrohres eingreift.

Bevorzugt sind die Korrespondenzgewinde des Außen- und des Innenrohres gegenläufig zu dem Korrespondenzgewinde Außenrohr/Brücke. Beispielsweise kann das Außenrohr ein rechtsgängiges Außengewinde und ein linksgängiges Innengewinde aufweisen, dazu korrespondierend das Innengewinde der Brücke bzw. das Außengewinde des Innenrohres.

Nach einem weiteren Gedanken der Erfindung ist vorgesehen, das Innenrohr verdrehfest zu halten, bevorzugt durch eine stirnseitige Anbindung beispielsweise an einer Verschlussplatte, mit der der Bremssattel zur Umgebung verschlossen ist. Die Befestigung des Innenrohres erfolgt dabei in einem vorzugsweise metallischen Faltenbalg der Bodenplatte, mit dem die Durchgangsöffnung der Verschlussplatte für die Stellspindel abgedichtet wird, wobei zur Verdrehsicherung lediglich die zwischen den Gewinden entstehenden Reibkräfte in Umfangsrichtung gehalten werden müssen. Alternativ zur stoffschlüssigen Befestigung kann die Stellspindel auch formschlüssig an der Verschlussplatte bzw. daran angeordneten Bauteilen angeschlossen sein.

Diese Abdichtung im Bereich der Durchgangsöffnung kann gegenüber einer nach dem Stand der Technik wesentlich einfacher ausgeführt werden, wobei bei Einsatz des genannten metallischen Faltenbalges auf eine sogenannte Sekundärdichtung vollständig verzichtet werden kann.

Bei einer Verdrehung des Außenrohres zur Nachstellung des Bremsbelages erfolgt durch die Festsetzung des Innenrohres dessen axialer Vorschub, wobei die Steigungen der gegenläufigen Gewinde bevorzugt gleich groß sind.

Durch die verdrehfeste Halterung des Innenrohres wird die zum Stand der Technik beschriebene Relativverdrehung gegenüber einem Druckstück vermieden, so dass die sich daraus ergebenden Nachteile, wie Abnutzung oder dergleichen, nicht eintreten und die Standzeit insgesamt erhöht wird.

Durch die Ausbildung der Stellspindel als Teleskoprohr wird die Nachstellgeschwindigkeit bei gleicher Geschwindigkeit deutlich gegenüber einer einteiligen Ausführung erhöht. Im Fall einer zweiteiligen Stellspindel mit dem genannten Innen- und Außenrohr wird die Nachstellgeschwindigkeit verdoppelt, ohne dass zur Verdrehung des Außenrohres eine höhere Kraft aufgebracht werden muss.

Im Falle, dass die Nachstelleinrichtung eine Synchronisiereinrichtung aufweist, wobei zwei parallel und abständig zueinander angeordnete Stellspindeln in der Brücke verdrehbar gelagert sind, die über einen Zugmitteltrieb synchron antreibbar sind, ist dieser auf der dem zuspannseitigen Bremsbelag zugeordneten Seite der Brücke angeordnet, wobei zwei Treibräder, von denen jeweils eines an einer der beiden Stellspindeln verdrehsicher, jedoch axial verschieblich eingreifend befestigt sind, drehbar, aber axial festgesetzt an Lagerstellen der Brücke gehalten sind.

Diese Anordnung der Synchronisiereinrichtung trägt gleichfalls zu einer platzsparenden Bauweise bei.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teil einer erfindungsgemäßen Scheibenbremse in einer perspektivischen Ansicht
- Figur 2: einen Schnitt durch den Teil der Scheibenbremse gemäß der Linie II-II in Figur 1
- Figur 3: einen Teilausschnitt der Einzelheit nach Figur 1 in einer teilweise geschnittenen Draufsicht.

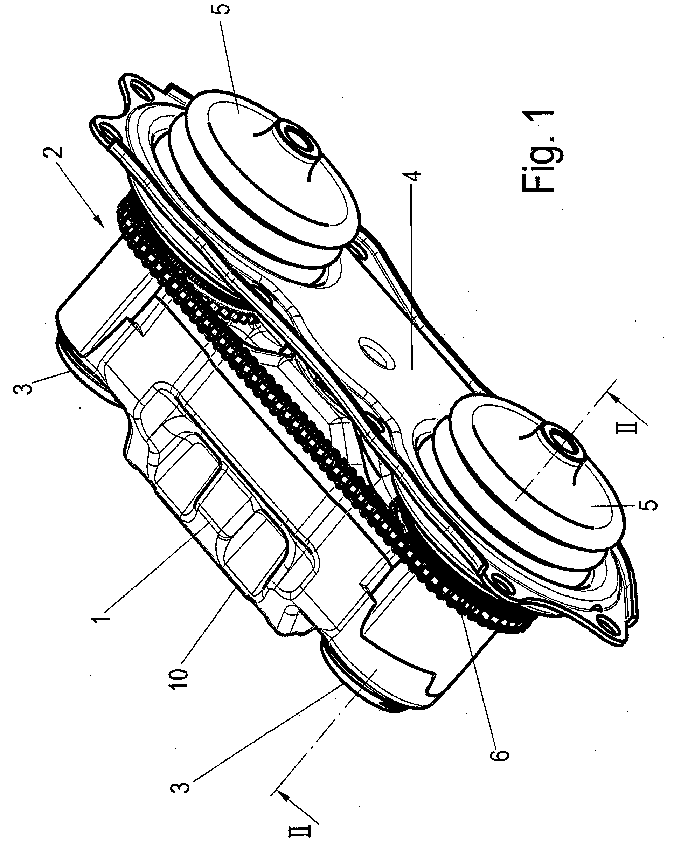

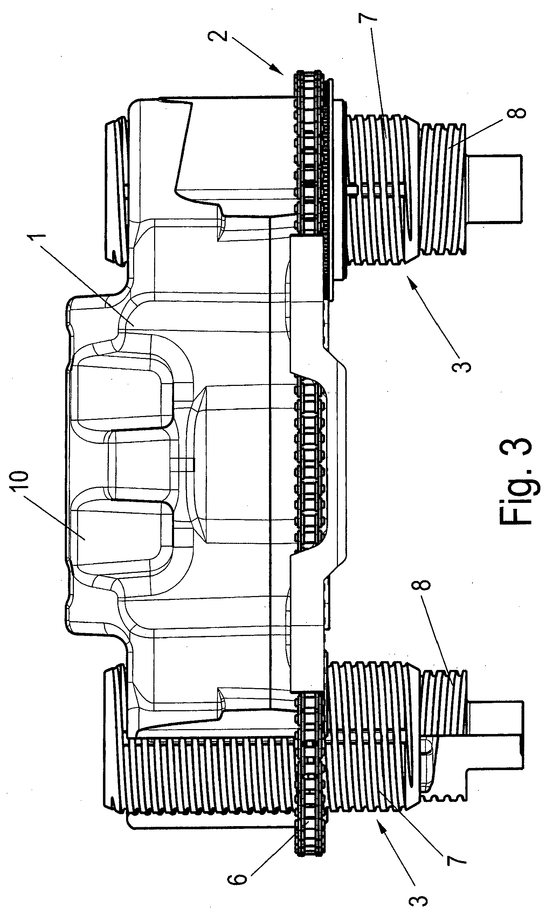

In der Figur 1 ist ein Teil einer Scheibenbremse für ein Nutzfahrzeug dargestellt, mit einer Brücke 1, in der als Teil einer Nachstelleinrichtung zwei parallel und abständig zueinander angeordnete Stellspindeln 3 verdrehbar festgelegt sind. Wie insbesondere die Figur 3 sehr deutlich wiedergibt, sind die Stellspindeln 3 mit einem Außengewinde versehen, das in ein Innengewinde von Gewindebohrungen in der Brücke 1 eingreift.

Diese Brücke 1 ist in einem nicht dargestellten Bremssattel positioniert und mittels eines Bremshebels in Richtung einer Bremsscheibe verschiebbar, wozu die Brücke rückseitig ein Widerlager 10 aufweist zur Anlage des Bremshebels.

Über die mit der Brücke 1 in Richtung der Bremsscheibe verschiebbaren Stellspindeln 3 wird ein, ebenfalls nicht gezeigter Bremsbelag im Fall einer Bremsung an die Bremsscheibe angepresst, wobei die Stellspindeln 3 jeweils an ein Druckstück angreifen, das zwischen dem Bremsbelag und der zugeordneten Bremsspindel 3 angeordnet ist.

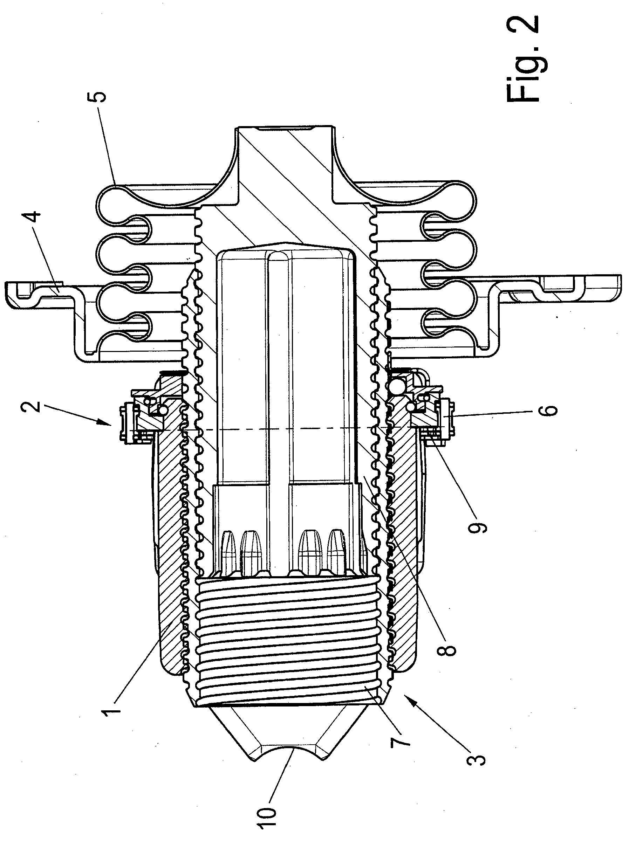

Zum Verschluss des Bremssattels ist eine in den Figuren 1 und 2 erkennbare Verschlussplatte 4 vorgesehen, der mit dem Bremssattel üblicherweise verschraubt ist und der von den beiden Spindeln 3 durchtreten ist, wobei die jeweilige Durchtrittsöffnung von einem Faltenbalg 5 abgedichtet ist, der einerseits an der Stellspindel 3 anliegt und andererseits mit der Verschlussplatte 4 verbunden ist.

Die Nachstelleinrichtung ist zum Ausgleich eines sich durch Abnutzung des Bremsbelages veränderten Lüftspiels, also einem Spalt zwischen der Bremsscheibe und dem Bremsbelag, vorgesehen. Bei Betätigung der Nachstelleinrichtung werden die Stellspindeln 3 aus der Brücke 1 herausgedreht und axial in Richtung der Bremsscheibe verstellt.

Erfindungsgemäß ist die Stellspindel 3 als Teleskopspindel ausgebildet und bevorzugt, wie im Beispiel dargestellt, zweiteilig. So besteht die Stellspindel 3 aus einem in die Brücke 1 eingeschraubten Außenrohr 7 und einem Innenrohr 8, das ebenfalls ein Außengewinde aufweist mit Eingriff in ein Innengewinde des Außenrohres 7.

Die Korrespondenzgewinde der Brücke 1 und des Außenrohres 7 sind gegenüber den Korrespondenzgewinden Innenrohr 8/Außenrohr 7 gegenläufig ausgebildet, jedoch mit gleicher Steigung.

Während das Außenrohr 7 verdrehbar ist, ist das Innenrohr 8 verdrehfest gehalten und zwar im Beispiel am Faltenbalg 5, der bevorzugt aus Metall besteht, wobei das Innenrohr 8 mit dem metallischen Faltenbalg 5 verschweißt sein kann. Denkbar ist jedoch auch, zur Verdrehsicherung einen Formschluss herzustellen zwischen besagtem Faltenbalg 5 oder der Verschlussplatte 4 und dem Innenrohr 8, wozu am Innenrohr 8 geeignete Formschlussmittel vorgesehen sind, die in angepasste Formschlussmittel des Faltenbalges 5 bzw. der Verschlussplatte 4 eingreifen.

Für eine synchrone Verstellung beim Nachstellen der Stellspindeln 3 ist eine Synchronisiereinrichtung 2 vorgesehen, die Treibräder 9 aufweist. Diese sind einerseits drehbar an einer Lagerstelle der Brücke 1 festgelegt und andererseits, vorzugsweise formschlüssig, verdrehfest, jedoch axial verschiebbar am Außenrohr 7 der Stellspindel 3 befestigt.

Die Treibräder 9 sind Bestandteil eines Zugmitteltriebs, der überdies ein Zugmittel 6 in Form einer Gliederkette aufweist, die in Zähne der Treibräder 9 eingreift. Erkennbar ist die Synchronisiereinrichtung 2 auf der der Verschlussplatte 4 zugewandten Seite der Brücke 1 positioniert.

### Bezugszeichenliste

- 1: Brücke
- 2: Synchronisiereinrichtung
- 3: Stellspindel
- 4: Verschlussplatte
- 5: Faltenbalg
- 6: Zugmittel
- 7: Außenrohr
- 8: Innenrohr
- 9: Treibräder
- 10: Widerlager

## Patentansprüche

1. Scheibenbremse für ein Nutzfahrzeug mit
a) einem eine Bremsscheibe übergreifenden Bremssattel,
b) einer im Bremssattel angeordneten Zuspanneinrichtung zum Andrücken von Bremsbelägen an die Bremsscheibe,
c) mindestens einer Stellspindel (3), die in einer Brücke (1), an der die Zuspanneinrichtung angreift, mittels eines Korrespondenzgewindes verdrehbar gelagert ist,
d) einer im Bremssattel positionierten Nachstelleinrichtung, mit der über eine axiale Verstellung der Stellspindel (3) eine verschleißbedingte Änderung eines Lüftspiels zwischen dem Bremsbelag und der Bremsscheibe im Wesentlichen ausgleichbar ist,
**dadurch gekennzeichnet, dass**
e) die Stellspindel (3) als Teleskopspindel ausgebildet ist.

2. Scheibenbremse nach Anspruch 1, **dadurch gekennzeichnet, dass** die Stellspindel (3) aus einem in die Brücke (1) eingeschraubten Außenrohr (7) und mindestens einem Innenrohr (8) besteht.

3. Scheibenbremse nach Anspruch 1 oder 2, **dadurch gekennzeichnet, dass** das Innenrohr (8) ein Außengewinde aufweist, das in ein Innengewinde des Außenrohres (7) eingreift.

4. Scheibenbremse nach einem der vorhergehenden Ansprüche, **dadurch gekennzeichnet, dass** das Innengewinde des Außenrohres (7) gegenläufig zu dessen Außengewinde ist.

5. Scheibenbremse nach einem der vorhergehenden Ansprüche, **dadurch gekennzeichnet, dass** die Steigung des Innengewindes und des Außengewindes des Außenrohres (7) gleich sind.

6. Scheibenbremse nach einem der vorhergehenden Ansprüche, **dadurch gekennzeichnet, dass** das Innenrohr (8) verdrehfest gehalten ist.

7. Scheibenbremse nach einem der vorhergehenden Ansprüche, **dadurch gekennzeichnet, dass** das Innenrohr (8) form- oder stoffschlüssig an einem eine Durchtrittsöffnung einer Verschlussplatte (4) befestigten Faltenbalg (5) oder der Verschlussplatte (4) angeschlossen ist.

8. Scheibenbremse nach einem der vorhergehenden Ansprüche, **dadurch gekennzeichnet, dass** der Faltenbalg (5) aus Metall besteht.

9. Scheibenbremse nach einem der vorhergehenden Ansprüche, **dadurch gekennzeichnet, dass** zwei Stellspindeln (3) in der Brücke (1) gehalten sind, die parallel und abständig zueinander angeordnet sind und an denen auf der dem Bremsbelag zugewandten Seite eine Synchronisiereinrichtung (2) angeschlossen ist, wobei die Synchronisiereinrichtung (2) einen Zugmitteltrieb aufweist, mit zwei Treibrädern (9), in die ein Zugmittel (6) eingreift, wobei die Treibräder (9) verdrehbar, jedoch axial gesichert an der Brücke (1) und verdrehgesichert, jedoch axial bewegbar an der Stellspindel (3) angeschlossen sind.

## Claims

1. Disc brake for a commercial vehicle, comprising
a) a brake calliper overlapping a brake disc,
b) an application device located in the brake calliper for pressing brake pads against the brake disc,
c) at least one actuating spindle (3) rotatably mounted in a bridge (1), on which the application device acts, by means of a corresponding thread,
d) an adjusting device positioned in the brake calliper for at least substantially compensating a wear-related change of a clearance between the brake pad and the brake disc by an axial adjustment of the actuating spindle (3).
**characterised in that**
e) the actuating spindle (3) is designed as a telescopic spindle.

2. Disc brake according to claim 1, **characterised in that** the actuating spindle (3) consists of an outer tube (7) screwed into the bridge (1) and at least one inner tube (8).

3. Disc brake according to claim 1 or 2, **characterised in that** the inner tube (8) has a male thread which engages with a female thread of the outer tube (7).

4. Disc brake according to any of the preceding claims, **characterised in that** the female thread of the outer tube (7) is contra-rotational relative to its male thread.

5. Disc brake according to any of the preceding claims, **characterised in that** the pitches of the female thread and the male thread of the outer tube (7) are identical.

6. Disc brake according to any of the preceding claims, **characterised in that** the inner tube (8) is held non-rotatably.

7. Disc brake according to any of the preceding claims, **characterised in that** the inner tube (8) is joined positively or by adhesive force to a bellows (5) secured in a through-opening of a closing plate (4) or to the closing plate (4).

8. Disc brake according to any of the preceding claims, **characterised in that** the bellows (5) is made of metal.

9. Disc brake according to any of the preceding claims, **characterised in that** two actuating spindles (3) are held in the bridge (1), which actuating spindles (3) are arranged parallel to and at a distance from one another and to which actuating spindles (3) a synchronising device (2) is connected on the side facing the brake pad, wherein the synchronising device (2) comprises a traction means drive with two driving wheels (9) engaging with a traction means (6), wherein the driving wheels (9) are connected to the bridge (1) in a rotatable but axially secure manner and to the actuating spindle (3) in a non-rotatable but axially movable manner.

## Revendications

1. Frein à disque pour un véhicule utilitaire, comprenant :
(a) un étrier de frein (1) chevauchant un disque de frein,
(b) un moyen de serrage du frein disposé dans ledit étrier de frein afin de presser des garnitures de frein contre ledit disque de frein,
(c) au moins une broche de réglage (3) montée de manière pivotante, moyennant un filet correspondant, dans un pont (1), auquel ledit moyen de serrage du frein s'engage,
(d) un moyen de rattrapage positionné dans ledit étrier de frein, qui permet essentiellement la compensation d'une variation d'un jeu entre ladite garniture de frein et ledit disque de frein, en raison de l'usure, par un réglage axial de ladite broche de réglage (6),
**caractérisé en ce**
(e) que ladite broche de réglage (3) est conçu sous forme d'une broche télescopique.

2. Frein à disque selon la revendication 1, **caractérisé en ce que** ladite broche de réglage (3) est constituée par un tube extérieur (7) vissé dans ledit pont (1) et au moins un tube intérieur (8).

3. Frein à disque selon la revendication 1 ou 2, **caractérisé en ce que** ledit tube (8) comprend un filetage se trouvant en prise dans un taraudage dudit tube extérieur (7).

4. Frein à disque selon une quelconque des revendications précédentes, **caractérisé en ce que** ledit taraudage dudit tube extérieur (7) est à contresens par rapport au filetage du tube.

5. Frein à disque selon une quelconque des revendications précédentes, **caractérisé en ce que** le pas dudit taraudage et le pas dudit filetage dudit tube extérieur (7) sont égaux.

6. Frein à disque selon une quelconque des revendications précédentes, **caractérisé en ce que** ledit tube intérieur (8) est retenu de manière à ne pouvoir tourner.

7. Frein à disque selon une quelconque des revendications précédentes, **caractérisé en ce que** ledit tube intérieur (8) est raccordé, de manière mécanique ou avec liaison de la matière, à un soufflet (5) solidarisé à travers l'ouverture de passage d'une plaque de fermeture (4) ou à ladite plaque de fermeture (4).

8. Frein à disque selon une quelconque des revendications précédentes, **caractérisé en ce que** ledit soufflet (5) est fait en métal.

9. Frein à disque selon une quelconque des revendications précédentes, **caractérisé en ce que** deux broches de réglage (3) sont retenu dans ledit pont (1), qui sont disposées en parallèle à un écart l'une de l'autre, et auxquelles, du côté en face de ladite garniture, est raccordé un moyen de synchronisation (2), audit moyen de synchronisation (2) comprenant une transmission à moyen de traction à deux roues motrices (9), dans lesquelles un moyen de traction (6) se trouve en prise, auxdites roues de traction (9) étant reliées de manière pivotante, mais sécurisée en sens axial audit pont, et de manière sécurisée contre la torsion, mais mobile en sens axial, à ladite broche de réglage (3).
